# EUROPÄISCHE PATENTANMELDUNG

(11) **EP 0 797 115 A1**
(43) Veröffentlichungstag der Anmeldung: **24.09.1997**
(21) Anmeldenummer: 97102045.8
(22) Anmeldetag: 10.02.1997
(51) Int. Cl.: G02B 7/00, G02B 7/182

(54) **Spannungsfreie Lagerung**

(30) Priorität: 21.02.1996 DE 29603024 U
(71) Anmelder: Carl Zeiss, D-89518 Heidenheim (Brenz) (DE)
(72) Erfinder: Meier, Hans-Jürgen, 73431 Aalen (DE)

(57) **Zusammenfassung**

Eine verschiedene lineare Wärmeausdehnungskoeffizienten von zwei Teilen (1, 2), insbesondere einem Zerodur-Spiegellager und einer Aluminium-Tragstruktur, ausgleichende spannungsfreie Lagerung mit Federgelenken (121-126, 211-216) und je zwei an jedem Fixpunkt (11, 12, 13; 21, 22, 23) der beiden Teile (1, 2) angreifenden Balken (31-36) weist parallel angeordnete Federgelenke (121-123; 124-126; 211-213; 214-216) auf, was die Kippsteifigkeit erhöht, bei geringem Gewicht und geringer Bauhöhe. Die gesamte Anordnung ist plan.

## Beschreibung

Die Erfindung betrifft eine spannungsfreie Lagerung mit
- einem ersten Teil, mit einem ersten linearen Wärmeausdehnungskoeffizienten und mit drei daran auf einem Kreis mit einem ersten Radius angeordneten Drehlagern mit zum Kreis senkrechten Drehachsen; mit
- einem zweiten Teil mit einem zweiten linearen Wärmeausdehnungsskoeffizienten und mit drei daran auf einem Kreis mit einem zweiten Radius angeordneten Drehlagern mit zum Kreis senkrechten Drehachsen; und
- sechs Balken paarweise gleicher Länge, welche jeweils ein Drehlager des ersten Teils und ein Drehlager des zweiten Teils miteinander verbinden gemäß dem Oberbegriff des Anspruches 1.

Eine derartige Hexapod-Lagerung ist z.B. in US 4,856,172 als Stand der Technik anhand der dortigen Figur 1B (Aufsicht) beschrieben. Zur Ausführung der Gelenke und Balken ist nichts gesagt. Die Drehlager bilden auf dem ersten und zweiten Teil jeweils ein gleichseitiges Dreieck.

Aus US 5,162,951 ist bekannt: Ein Spiegel ist über Lenker mit beidseitigen Biegegelenken an einem Träger befestigt. Die Abmessungen der Teile und ihre Wärmeausdehnungskoeffizienten sind so ausgelegt, daß Temperaturänderungen ohne Spannungsänderungen am Spiegel erfolgen können. Biegemomente am Spiegel werden dadurch vermieden, daß auch der Abstand Spiegel - Halter variiert, was möglich ist, da es sich um eine räumliche Anordnung handelt, bei der die Gelenke nicht koplanar sind. Jedes Gelenk ist mit nur einem Lenker verbunden.

Aus EP 0 249 887 ist bekannt: Ein Spiegel für die Photolithographie ist über Anschlußstücke aus Material mit ähnlicher Wärmeausdehnung und drei tangentiale Lenker mit an beiden Enden vorgesehenen gekreuzten Federgelenken mit dem Träger verbunden.

Damit wird eine spannungsfreie Aufhängung und temperaturunabhängige Ausführung erreicht. Durch die gekreuzten Federgelenke ist die Anordnung nicht steif gegen Auslenkungen aus der Spiegelebene.

Aufgabe der Erfindung ist es, eine spannungsfreie Lagerung gemäß dem Oberbegriff des Anspruches 1 so weiterzubilden, daß hohe Steifigkeit gegen Auslenkungen des ersten Teils aus der Ebene des zweiten Teils erreicht wird. Die Anordnung soll leicht zu montieren und zu justieren sowie von geringem Gewicht und satellitentauglich sein.

Gelöst wird die Aufgabe mit den kennzeichnenden Merkmalen des Anspruchs 1. Besonders vorteilhaft ist die Ausführung nach Anspruch 2, wonach jedes Drehlager aus mindestens zwei Federgelenken mit parallelen Drehachsen gebildet wird. Da die beiden Federgelenke mit den Drehachsen eine Ebene aufspannen, ist die Anordnung besonders steif gegen Kippungen um zu den eigentlichen Drehachsen senkrechte Achsen, auch wenn die Höhe der Federgelenke gering ist und sie weich ausgebildet sind. Die Erfindung ist auch für erste Teile, deren Drehachsen ein unsymmetrisches Dreieck bilden, geeignet.

Die Ausführungen nach den Ansprüchen 3-7 betreffen vorteilhafte Ausführungsformen.

Die Zeichnung dient zur näheren Erläuterung der Erfindung.
- Figur 1: zeigt als Ausführungsbeispiel eine einstückige Ausgleichsstruktur in Aufsicht;
- Figur 2: zeigt davon eine Seitenansicht.

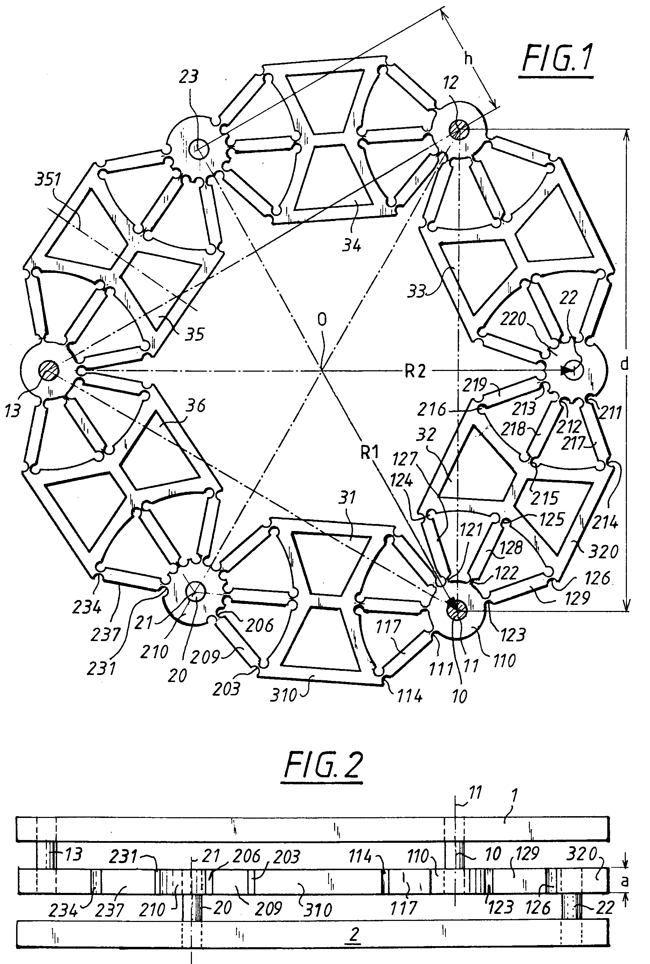

Die Ausgleichsstruktur der Figur 1 ist an den Drehachsen 11, 12, 13 wie Figur 2 zeigt durch Stifte (10) mit dem ersten Teil 1 verbunden. Das erste Teil 1 ist insbesondere ein Spiegelträger aus einem Material mit minimalem linearem Wärmeausdehnungskoeffizienten α₁, z.B. Glaskeramik Zerodur von Schott.

Die Drehachsen 11, 12, 13 bilden in dem Beispiel ein gleichseitiges Dreieck. Es sind aber beliebige Dreiecke möglich.

An den Drehachsen 21, 22, 23 ist die Ausgleichsstruktur durch Stifte (20) mit einem zweiten Teil 2 verbunden, z.B. einer Tragstruktur aus Aluminium, mit relativ großem linearem Wärmeausdehnungskoeffizienten α₂. Die Stifte (10, 20) werden vorzugsweise verklebt oder verschraubt. Zur Vermeidung der Übertragung von Kippmomenten werden besonders die Stifte (20) oder das zweite Teil 2 im Bereich der Drehachsen 21, 22, 23 mit gekreuzten Federgelenken versehen (nicht dargestellt), wenn die Tragstruktur hierüber an einem weiteren Teil befestigt werden soll.

Die Drehachsen 11, 12, 13 des ersten Teils 1 bilden im Beispiel ein gleichseitiges Dreieck mit dem Radius R1, der Seitenlänge d und dem Schwerpunkt 0.

Die Drehachsen 21, 22, 23 des zweiten Teils 2 bilden dann ebenfalls ein gleichseitiges Dreieck mit dem Radius R2 und dem selben Schwerpunkt 0. Auch bei unsymmetrischen Achsen-Dreiecken ist der Schwerpunkt gemeinsam. Jeweils eine Drehachse (23) des zweiten Teils 2 und zwei Drehachsen (12, 13) des ersten Teils 1 bilden ein gleichschenkliges Dreieck mit der Basis d und der Höhe h.

Bestehen Teil 1 aus Zerodur und Teil 2 aus Aluminium und ist die Seitenlänge d = 144,75 mm vorgegeben, so beträgt bei erfindungsgemäßer Ausführung der Ausgleichsstruktur, also bei Ausgleich der thermischen Spannungen, die Höhe h
30,273 mm für Titan
35,114 mm für die Stahllegierung X12CrMoS17 und
39,573 mm für Beryllium
als Werkstoff der Ausgleichsstruktur der Figur 1.

Die gesamte Anordnung des Beispiels besitzt, einschließlich der Detailstruktur der Balken 31-36, dreizählige Rotationssymmetrie um die zur Zeichenebene senkrechte Achse durch den Schwerpunkt 0. Wichtig ist, daß die gesamte Ausgleichsstruktur plan ausgeführt ist, im Gegensatz zu bekannten Hexapod-Anordnungen. Damit ist ein Versatz senkrecht zu dieser Ebene (wie bei US 5,162,951) ausgeschlossen. Natürlich ist die Materialauswahl und Geometrie dadurch beschränkt.

Die Balken 31-36 sind paarweise, hier auch alle untereinander gleich und sind im Beispiel symmetrisch zur Mittelebene (351) zwischen den beiden verbundenen Drehachsen (13, 23) angeordnet.

Näher beschrieben wird der Aufbau am Beispiel des Balkens 32 zwischen den Drehachsen 11 und 22.

Drei erste Federgelenke 121, 122, 123 liegen auf einem Kreis um die Drehachse 11 am mit dem Stift 10 verbundenen Teil 110. Sie gehen über in drei radiale Stäbe 127, 128, 129 gleicher Länge. Die anschließenden Federgelenke 124, 125, 126 liegen also wieder auf einem Kreis um die Drehachse 11. Die Achsen aller Federgelenke 121-126 liegen parallel und senkrecht zur Zeichenebene. Die Federgelenke 124, 125, 126 sind mit dem starren Mittelteil 320 verbunden, das als fachwerkartiger Rahmen in leichter steifer Ausführung ausgebildet ist. Daran sind gegenüberliegend auf einem Kreis um die Drehachse 22 die Federgelenke 214, 215, 216 angeordnet. An diese schließen radial auf die Drehachse 22 zulaufend die Stäbe 217, 218, 219 an, welche mit den auf einem Kreis um die Drehachse 22 liegenden Federgelenken 211, 212, 213 mit dem Bereich 220 verbunden sind, der an Teil 2 fixiert ist.

Bei geringer Höhe a (Figur 2) der Ausgleichsstruktur und aller Elemente 110, 121-129, 210, 211-219, 320 ergibt sich hohe Steifigkeit gegen Verkippungen der beiden Drehachsen 11, 22 und eine gute Beweglichkeit der Drehung um die Drehachsen 11, 12 bei leichter Bauweise.

Jeweils ein Stab 128, 218 mit den zugehörigen Federgelenken 122, 125 bzw. 212, 215 ist auf der Verbindungslinie der beiden Drehachsen 11, 22 angeordnet. Die anderen Teile sind symmetrisch zu dieser Verbindungslinie angeordnet.

Von der Zahl und der Symmetrie der Stäbe 127, 128, 129, 217, 218, 219 und der zugehörigen Federgelenke kann auch abgewichen werden.

Die anderen Balken 33, 33-36 sind vollkommen gleich aufgebaut. Mit Bezugszeichen sind nur die Teile versehen, die auch in der Seitenansicht der Figur 2 zu sehen sind. Es sind dies die Federgelenke 111, 114, 203, 231, 234, die Stäbe 117, 209, 237 und das Mittelteil 310 sowie das der Drehachse 21 zugeordnete, mit dem Stift 20 verbundene Teil 210.

Dargestellt ist eine einstückige Ausgleichsstruktur. Natürlich kann diese auch aus mehreren Einzelteilen, zweckmäßigerweise einzelnen Balken 31-36 inklusive der enthaltenen Federgelenke usw., bestehen.

## Patentansprüche

1. Spannungsfreie Lagerung mit
- einem ersten Teil (1) mit einem ersten linearen Wärmeausdehnungskoeffizienten (α₁) und mit drei daran auf einem Kreis mit einem ersten Radius (R1) angeordneten Drehlagern mit zum Kreis senkrechten Drehachsen (11, 12, 13); mit
- einem zweiten Teil (2) mit einem zweiten linearen Wärmeausdehnungskoeffizienten (α₂) und mit drei daran auf einem Kreis mit einem zweiten Radius (R2), angeordneten Drehlagern mit zum Kreis senkrechten Drehachsen (31, 22, 23); und mit
- sechs Balken (31-36) paarweise gleicher Länge, welche jeweils ein Drehlager des ersten Teils (1) und ein Drehlager des zweiten Teils (2) miteinander verbinden, dadurch gekennzeichnet, daß alle Drehlager in einer Ebene liegen, sowie daß die Balken (31-36) einen dritten linearen Wärmeausdehnungskoeffizienten (α₃) aufweisen.

2. Spannungsfreie Lagerung nach Anspruch 1, dadurch gekennzeichnet, daß jedes Drehlager aus mindestens zwei Federgelenken (121-123) mit parallelen Drehachsen gebildet ist.

3. Spannungsfreie Lagerung nach Anspruch 1 oder 2, dadurch gekennzeichnet, daß jeder Balken (31-36) einschließlich der beiden verbundenen Drehlager aus
- mindestens zwei auf einem ersten Kreis um die Drehachse (11-13) des ersten Drehlagers liegenden Federgelenken (121-123)
- zu jedem Federgelenk (121-123) einem radial zur Drehachse gerichteten Stab (127-129),
- zu jedem Stab (127-129) ein auf einem zweiten Kreis um die Drehachse (11-13) liegendes zweites Federgelenk (124-126),
- ein die zweiten Federgelenke (124-126) verbindendes starres Mittelteil (320)
- und symmetrisch dazu ausgebildet zur Verbindung mit dem zweiten Drehlager nochmals die gleichen Teile nämlich zweite Federgelenke (214-216), Stäbe (217-219) und Federgelenke (111-203) aufweist.

4. Spannungsfreie Lagerung nach Anspruch 2, dadurch gekennzeichnet, daß jeweils eines der Federgelenke (122, 125, 215, 212) und einer der Stäbe (128, 218), die den beiden Drehlagern zugeordnet sind, auf der Verbindungslinie der beiden Drehachsen (11, 22) liegen.

5. Spannungsfreie Lagerung nach Anspruch 2 oder 3, dadurch gekennzeichnet, daß das starre Mittelteil (320) als Fachwerk ausgebildet ist.

6. Spannungsfreie Lagerung nach mindestens einem der Ansprüche 1-4, dadurch gekennzeichnet, daß die ersten, zweiten und dritten Wärmeausdehnungskoeffizienten (α₁, α₂, α₃) durch geeignete Materialauswahl und der erste und der zweite Radius (R1, R2) so ausgewählt sind, daß für einen bestimmten Temperaturbereich bei jeder Temperatur die Länge der spannungsfreien Balken (31) gleich dem Abstand der Drehachsen (11-13) des ersten Teils (1) von den Drehachsen (21-23) des zweiten Teils (2) ist.

7. Spannungsfreie Lagerung nach mindestens einem der Ansprüche 1-5, dadurch gekennzeichnet, daß die sechs Balken (31-36) und sechs Drehlager zu einer einstückigen Ausgleichsstruktur zusammengefaßt sind.
